# EUROPÄISCHE PATENTSCHRIFT

(11) **EP 3 682 302 B1**
(45) Veröffentlichungstag und Bekanntmachung des Hinweises auf die Patenterteilung: **19.01.2022**
(21) Anmeldenummer: 18750167.1
(22) Anmeldetag: 02.08.2018
(51) Int. Cl.: G05B 19/042

(54) **VERFAHREN ZUR INBETRIEBNAHME EINES STEUERGERÄTESYSTEMS UND STEUERGERÄTESYSTEM**
METHOD FOR STARTING UP A CONTROLLER SYSTEM AND CONTROLLER SYSTEM
PROCÉDÉ DE MISE EN SERVICE D'UN SYSTÈME DE COMMANDE ET SYSTÈME DE COMMANDE

(30) Priorität: 25.08.2017 DE 102017214892
(43) Veröffentlichungstag der Anmeldung: 22.07.2020
(73) Patentinhaber: Lenze Automation GmbH, 31855 Aerzen (DE)
(72) Erfinder: HESSE, Peter, 31789 Hameln (DE); DÜSTERBERG, Dirk, 31860 Emmerthal (DE); GENTZEN, Thomas, 38162 Cremlingen (DE)
(74) Vertreter: Patentanwälte Ruff, Wilhelm, Beier, Dauster & Partner mbB
(86) Internationale Anmeldenummer: PCT/EP2018/071000
(87) Internationale Veröffentlichungsnummer: WO 2019/038046

(56) Entgegenhaltungen:
- EP-A1- 2 741 451
- DE-A1-102007 062 395
- DE-A1-102011 102 770
- DE-U1-202015 102 520

## Beschreibung

Die Erfindung betrifft ein Verfahren zur Inbetriebnahme eines Steuergerätesystems und ein Steuergerätesystem.

Die EP 2 741 451 A1 zeigt ein Verfahren zum Anbinden eines Hardware-Moduls an einen Feldbus, wobei in Abhängigkeit von einem Typ des Feldbusses eine typspezifische Kommunikationssoftware aus einem Speicher des Hardware-Moduls geladen wird.

Die DE 20 2015 102 520 U1 zeigt ein Motorsteuergerät, wobei das Motorsteuergerät Wahlmittel aufweist, die dazu angepasst sind, ein spezifisches Netzwerkprotokoll eines Kommunikationsnetzes auszuwählen und zu laden.

Die DE 10 2011 102 770 A1 zeigt ein Steuergerät und ein Verfahren zur Herstellung eines busangepassten Steuergeräts.

Die DE 10 2007 062 395 A1 offenbart ein Verfahren zum Parametrieren eines Feldgerätes der Prozessautomatisierungstechnik einer ersten Softwareversion basierend auf Parametrierungsdaten, die sich auf eine zweite Softwareversion desselben Feldgerätetyps beziehen. Das Verfahren weist die nachfolgenden Schritte, die automatisiert durchgeführt werden, auf: Angeben zumindest der Parameter, deren Parameterwerte von der zweiten Softwareversion nicht direkt in die erste Softwareversion übernehmbar sind, sowie mindestens eines Parametrierungsvorschlages in Bezug auf diese Parameter; und Bereitstellen zumindest einer Auswahlmöglichkeit an den Benutzer dahingehend, ob die Parameterwerte gemäß dem Parametrierungsvorschlag übernommen werden sollen.

Der Erfindung liegt die Aufgabe zugrunde, ein Verfahren zur Inbetriebnahme eines Steuergerätesystems und ein Steuergerätesystem zur Verfügung zu stellen, die einfach, flexibel und zuverlässig parametrierbar sind.

Die Erfindung löst diese Aufgabe durch ein Verfahren zur Inbetriebnahme eines Steuergerätesystems nach Anspruch 1 und ein Steuergerätesystem nach Anspruch 8.

Das Verfahren dient zur Inbetriebnahme eines Steuergerätesystems.

Das Steuergerätesystem weist ein oder mehrere elektrische Steuergeräte auf.

Das Steuergerätesystem weist weiter eine Mehrzahl von Hardware-Modulen auf, die getrennt von dem Steuergerät ausgebildet sind und die mit dem Steuergerät koppelbar sind, indem das Hardware-Modul in einen hierfür vorgesehenen Steckplatz des Steuergeräts eingesteckt wird. Das Steuergerätesystem weist Hardware-Module unterschiedlichen Typs auf, insbesondere sind in dem Steuergerätesystem mindestens zwei unterschiedliche Typen von Hardware-Modulen vorgesehen. Jedem Typ von Hardware-Modul sind ein typspezifischer Parametersatz und ein typspezifisches Steuerprogramm zugeordnet, wobei ein jeweiliger Parametersatz eine Menge von Parametern mit einstellbaren Parameterwerten aufweist. Die Menge kann typabhängig beispielsweise zwischen einem und 100 Parametern aufweisen.

Einstellbare Parameter können, gegliedert nach unterschiedlichen Arten von Hardware-Modulen, beispielsweise ausgewählt sein aus:
- Feldbus-Parameter:: Station name, IO address, Watchdog reaction, ...
- Geber-Parameter:: Number of pole pairs, Supply voltage, Increments per revolution, ...
- Safety-Parameter:: SS1-Stop-Time, SLS-Limited-Speed, SLP-Lower-Position-Limit, ...

Das erfindungsgemäße Verfahren weist folgende Schritte auf.

Eines der Hardware-Module wird mit dem Steuergerät gekoppelt, beispielsweise indem es in einen dafür vorgesehenen Steckplatz des Steuergeräts eingesteckt wird.

Das Steuergerät bestimmt den Typ des gekoppelten Hardware-Moduls, indem das Steuergerät eine Typkennung des Hardware-Moduls aus einem hierfür vorgesehenen Register des Hardware-Moduls ausliest.

Das Steuergerät wählt aus und lädt das passende typspezifische Steuerprogramm in Form einer Treibersoftware, die zu dem Typ des gekoppelten Hardware-Modules passend ist.

Das Steuergerät wählt den typspezifischen Parametersatz als einstellbarer Parametersatz aus, d.h. es sind diejenigen Parameter des Parametersatzes einstellbar, der dem Typ des gekoppelten Hardware-Moduls entspricht.

Gemäß einer Ausführungsform sind die Hardware-Module Feldbus-Module für Feldbusse unterschiedlichen Typs, beispielsweise PROFINET-Feldbus-Module, EtherCAT-Feldbus-Module oder Ethernet/IP Feldbus-Module. Die Hardware-Module können auch Geber-Module für Geber unterschiedlichen Typs sein, beispielsweise Drehwinkelgeber usw. Die Hardware-Module können auch Sicherheits-Module oder Safety-Module unterschiedlichen Typs sein.

Gemäß einer Ausführungsform wird das Steuerprogramm aus einem steuergeräteinternen Speicher ausgewählt, wobei der steuergeräteinterne Speicher dazu ausgebildet ist, alle typspezifischen Steuerprogramme zu speichern. Der steuergeräteinterne Speicher kann entweder persistent auf dem elektrischen Steuergerät gehalten sein oder von einem steuergeräteexternen Speicher bei Start geladen werden.

Gemäß einer Ausführungsform werden alle typspezifischen Parametersätze von einem steuergeräteexternen Speicher in einen steuergeräteinternen Parametersatzspeicher geladen und der typspezifische Parametersatz wird aus dem steuergeräteinternen Parametersatzspeicher ausgewählt. Der steuergeräteexternen Speicher kann beispielsweise ein mit dem Steuergerät koppelbares Wechselspeichermedium sein, beispielsweise eine SD-Karte.

Gemäß einer Ausführungsform werden Werte von Parametern des geladenen Parametersatzes eingestellt und anschließend abgespeichert. Dies kann beispielsweise mittels einer Bedienerschnittstelle des Steuergeräts erfolgen und/oder mittels eines Bediengeräts, das mit dem Steuergerät zum Datenaustausch koppelbar ist

Gemäß einer Ausführungsform ist das Steuergerät ein Frequenzumrichter, ein Servoumrichter oder ein so genannter Motion Controller. Motion Controller sind elektrische Steuergeräte zur Bewegungsregelung oder Bewegungssteuerung, mittels denen eine Pose, eine Geschwindigkeit, eine Beschleunigung oder einer Kombination daraus beeinflusst werden kann. Typische Anwendung ist beispielsweise die Punkt-zu-Punkt-Positionsregelung und die Drehzahlregelung.

Gemäß einer Ausführungsform weist das Steuergerätesystem ein Bediengerät auf, beispielsweise in Form eines tragbaren Computers, das in einem Inbetriebnahmemodus und in einem Diagnosemodus betreibbar ist. Für diesen Fall wird das Bediengerät mit dem Steuergerät zum Datenaustausch drahtgebunden oder drahtlos gekoppelt. In dem Inbetriebnahmemodus sind unabhängig von dem Typ des mit dem Steuergerät gekoppelten Hardware-Moduls die Parameter aller typspezifischen Parametersätze sichtbar und einstellbar. In dem Diagnosemodus sind dagegen nur die Parameter des Parametersatzes sichtbar und einstellbar, der dem Typ des mit dem Steuergerät gekoppelten Hardware-Moduls entspricht.

Das erfindungsgemäße Steuergerätesystem weist mindestens ein elektrisches Steuergerät und eine Mehrzahl von mit dem Steuergerät koppelbaren Hardware-Modulen unterschiedlichen Typs auf, wobei jedem Typ von Hardware-Modul ein typspezifischer Parametersatz und ein typspezifisches Steuerprogramm zugeordnet sind, wobei ein jeweiliger Parametersatz eine Menge von Parametern mit einstellbaren Parameterwerten aufweist. Das Steuergerät ist zur Durchführung des oben beschriebenen Verfahrens ausgebildet.

Gemäß einer Ausführungsform weist das Steuergerätesystem ein Bediengerät auf, das zum Einstellen der Parameterwerte ausgebildet ist.

Die Erfindung wird nachfolgend unter Bezugnahme auf die Zeichnung detailliert beschrieben. Hierbei zeigt:

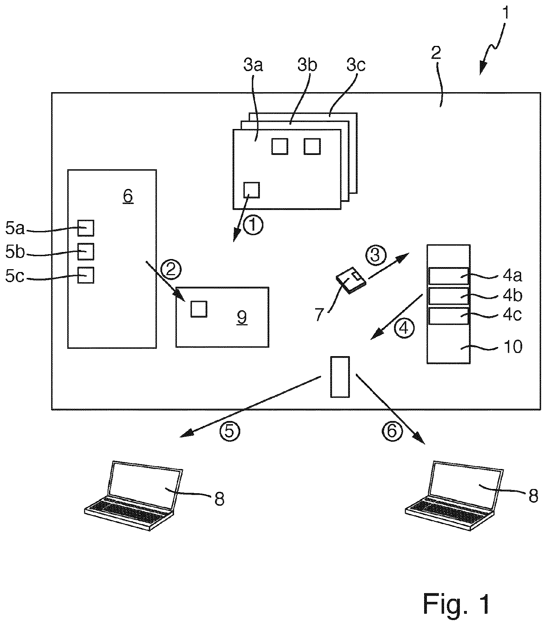

- Fig. 1: schematisch ein Steuergerätesystem mit einem elektrischen Steuergerät, das mittels eines erfindungsgemäßen Verfahrens in Betrieb genommen wird.

Fig. 1 zeigt schematisch ein Steuergerätesystem 1. Das Steuergerätesystem 1 weist exemplarisch ein elektrisches Steuergerät 2 in Form eines Frequenzumrichters auf. Es versteht sich, dass das Steuergerätesystem 1 eine Vielzahl von Steuergeräten aufweisen kann.

Das Steuergerätesystem 1 weist weiter eine Mehrzahl (hier exemplarisch drei) von mit dem Steuergerät 1 koppelbaren Hardware-Modulen 3a, 3b, 3c unterschiedlichen Typs auf. Die Hardware-Module 3a, 3b, 3c sind vorliegend Feldbus-Module für Feldbusse unterschiedlichen Typs, beispielsweise ist das Hardware-Modul 3a ein PROFINET-Feldbus-Modul, das Hardware-Modul 3b ist ein EtherCAT-Feldbus-Modul und das Hardware-Modul 3c ist ein Ethernet/IP Feldbus-Modul.

Jedem Typ von Hardware-Modul 3a, 3b, 3c ist ein typspezifisches Treiberprogramm bzw. Steuerprogramm 5a, 5b, 5c zugeordnet, wobei das Steuerprogramm 5a beispielsweise einen PROFINET-Stack darstellt, das Steuerprogramm 5b einen EtherCAT-Stack darstellt und das Steuerprogramm 5c einen Ethernet/IP-Stack darstellt. Die Steuerprogramme 5a, 5b, 5c sind in einem steuergeräteinternen Speicher 6 gespeichert.

Jedem Typ von Hardware-Modul 3a, 3b, 3c ist weiter ein typspezifischer Parametersatz 4a, 4b, 4c zugeordnet, wobei ein jeweiliger Parametersatz 4a, 4b, 4c eine Menge von Parametern mit einstellbaren Parameterwerten aufweist, die es bei der Inbetriebnahme geeignet einzustellen gilt.

Eine Inbetriebnahme des Steuergeräts 2 findet wie folgt statt.

In einem Schritt 1 (symbolisiert durch die Ziffer 1 innerhalb eines Kreises) wird eines der Hardware-Modul 3a, 3b bzw. 3c mit dem Steuergerät 2 gekoppelt, indem es beispielsweise in eine hierfür vorgesehene Steckverbindung des Steuergeräts 2 eingesteckt wird. Nun erkennt das Steuergerät 2 den Typ des gesteckten Hardware-Moduls. Jedes Hardware-Modul 3a, 3b bzw. 3c kann beispielsweise bei seiner Fertigung mit einer typspezifischen Kennung beschrieben werden, die festlegt, ob es sich beispielsweise um ein PROFINET-, ein EtherCAT- oder ein Ethernet/IP-Feldbusmodul handelt. In einer Bootsequenz des Steuergeräts 2 wird diese Kennung ausgelesen, so dass das Steuergerät 2 Kenntnis hat über den Typ des gesteckten Hardware-Moduls.

In einem Schritt 2 (symbolisiert durch die Ziffer 2 innerhalb eines Kreises) wählt das Steuergerät 2 aus dem Speicher 6 das zum erkannten Typ des Hardware-Moduls passende Steuerprogramm aus und lädt das ausgewählte Steuerprogramm in ein FPGA 9. Das Steuerprogramm enthält sämtliche für den verwendeten Feldbus notwendigen IPCores/Stacks. Das FPGA übernimmt dann basierend auf dem geladenen Steuerprogramm das Abarbeiten eines zum verwendeten Feldbus passenden Protokoll-Stacks.

In einem Schritt 3 (symbolisiert durch die Ziffer 3 innerhalb eines Kreises) lädt das Steuergerät 2 von einer SD-Karte 7 sämtliche zu den Hardware-Modulen 3a, 3b, 3c gehörende Parametersätze 4a bis 4c in einen internen Parametersatzspeicher 10. Alternativ können die Parametersätze 4a bis 4c auch von einer übergeordneten Steuerung geladen werden.

In einem Schritt 4 (symbolisiert durch die Ziffer 4 innerhalb eines Kreises) wählt dann das Steuergerät 2 dann den zum erkannten Typ des Hardware-Moduls passenden Parametersatz aus dem Parametersatzspeicher 10 aus und lädt den ausgewählten Parametersatz dann als einstellbaren Parametersatz, so dass die Parameter des geladenen Parametersatzes zur Parametrierung des elektrischen Steuergeräts 1 verfügbar sind.

Durch diese Schritte ist es möglich, ein Projekt für unterschiedliche Feldbus-Anschaltungen zu realisieren. Wird ein PROFINET-Hardware-Modul gesteckt, sind auch der PROFINET-Stack und die PROFINET-Parameter verfügbar, wird ein anderes Hardware-Modul gesteckt, werden die entsprechenden Daten geladen.

Das Steuergerätesystem 1 kann ein Bediengerät 8 aufweisen, das zum Einstellen der Parameterwerte ausgebildet ist.

Das Bediengerät ist in einem Inbetriebnahmemodus, exemplarisch links dargestellt, und in einem Diagnosemodus betreibbar, exemplarisch rechts dargestellt.

In dem Inbetriebnahmemodus sind unabhängig von dem Typ des mit dem Steuergerät 2 gekoppelten Hardware-Moduls 3a, 3b, 3c die Parameter aller typspezifischen Parametersätze 4a, 4b, 4c sichtbar und einstellbar, exemplarisch symbolisiert durch die Ziffer 5 innerhalb eines Kreises.

In dem Diagnosemodus sind dagegen nur die Parameter desjenigen Parametersatzes 4a, 4b, 4c sichtbar und einstellbar, der dem Typ des mit dem Steuergerät 2 gekoppelten Hardware-Moduls 3a, 3b, 3c entspricht, symbolisiert durch die Ziffer 6 innerhalb eines Kreises.

Mit anderen Worten werden in dem Inbetriebnahmemodus alle Parameter von allen möglichen Feldbussen angezeigt und sind durch einen Inbetriebnehmer einstellbar. D.h. bei der Inbetriebnahme können alle Feldbusse parametriert werden, egal ob diese als Modul momentan gesteckt sind oder nicht. Der Inbetriebnahmemodus ist beispielsweise während einer Projektierung des Steuergerätesystems für einen Systementwickler einzustellen, wohingegen der Diagnosemodus für einen Endanwender sinnvoll ist, der lediglich die tatsächlich vorherrschende Konfiguration parametrieren möchte.

Die Ausführungsformen wurden im Kontext von Hardware-Modulen in Form von Feldbusmodulen beschrieben. Es versteht sich, dass die Erfindung auch im Kontext sämtlicher Hardware-Module anwendbar ist, die mit dem Steuergerät koppelbar sind und die eine höhere Software-Komplexität in dem Steuergerät nach sich ziehen. Insbesondere gilt dies für Geber-Module und/oder Safety-Module, speziell wenn diese höherwertige und komplexere Protokolle verwenden.

## Patentansprüche

1. Verfahren zur Inbetriebnahme eines Steuergerätesystems (1), wobei das Steuergerätesystem (1) aufweist:
- mindestens ein elektrisches Steuergerät (2), und
- eine Mehrzahl von mit dem Steuergerät (2) koppelbaren Hardware-Modulen (3a, 3b, 3c) unterschiedlichen Typs, wobei jedem Typ von Hardware-Modul (3a, 3b, 3c) ein typspezifischer Parametersatz (4a, 4b, 4c) und ein typspezifisches Steuerprogramm (5a, 5b, 5c) zugeordnet sind, wobei ein jeweiliger Parametersatz (4a, 4b, 4c) eine Menge von Parametern mit einstellbaren Parameterwerten aufweist und das typspezifische Steuerprogramm (5a, 5b, 5c) eine Treibersoftware ist, die zu dem Typ des gekoppelten Hardware-Moduls (3a, 3b, 3c) passend ist,
wobei das Verfahren die Schritte aufweist:
- Koppeln eines Hardware-Moduls (3a, 3b, 3c) mit dem Steuergerät (2), indem das Hardware-Modul (3a, 3b, 3c) in einen dafür vorgesehenen Steckplatz des Steuergeräts (2) eingesteckt wird,
- mittels des Steuergeräts (2), Bestimmen des Typs des gekoppelten Hardware-Moduls (3a, 3b, 3c), indem das Steuergerät (2) eine Typkennung des Hardware-Moduls (3a, 3b, 3c) aus einem hierfür vorgesehenen Register des Hardware-Moduls (3a, 3b, 3c) ausliest,
- mittels des Steuergeräts (2), Auswählen des typspezifischen Steuerprogramms (5a, 5b, 5c), und
- mittels des Steuergeräts (2), Auswählen des typspezifischen Parametersatzes (4a, 4b, 4c) als einstellbarer Parametersatz.

2. Verfahren nach Anspruch 1, **dadurch gekennzeichnet, dass**
- die Hardware-Module (3a, 3b, 3c) Feldbus-Module für Feldbusse unterschiedlichen Typs sind, und/oder die Hardware-Module (3a, 3b, 3c) Geber-Module für Geber unterschiedlichen Typs sind und/oder die Hardware-Module (3a, 3b, 3c) Sicherheits-Module unterschiedlichen Typs sind.

3. Verfahren nach Anspruch 1 oder 2, **dadurch gekennzeichnet, dass**
- das Steuerprogramm (5a, 5b, 5c) aus einem steuergeräteinternen Speicher (6) ausgewählt wird.

4. Verfahren nach einem der vorhergehenden Ansprüche, **dadurch gekennzeichnet, dass**
- alle typspezifischen Parametersätze (4a, 4b, 4c) von einem steuergeräteexternen Speicher (7) in einen steuergeräteinternen Parametersatzspeicher (10) geladen werden und der typspezifische Parametersatz aus dem steuergeräteinternen Parametersatzspeicher (10) ausgewählt wird.

5. Verfahren nach einem der vorhergehenden Ansprüche, **gekennzeichnet durch** die Schritte
- Einstellen von Werten von Parametern des geladenen Parametersatzes (4a, 4b, 4c) und Abspeichern der eingestellten Werte.

6. Verfahren nach einem der vorhergehenden Ansprüche, **dadurch gekennzeichnet, dass**
- das Steuergerät (2) ein Frequenzumrichter, ein Servoumrichter oder ein Motion Controller ist.

7. Verfahren nach einem der vorhergehenden Ansprüche, **dadurch gekennzeichnet, dass**
- das Steuergerätesystem ein Bediengerät (8) aufweist, das in einem Inbetriebnahmemodus und in einem Diagnosemodus betreibbar ist, wobei das Verfahren die weiteren Schritte aufweist:
- Koppeln des Bediengeräts (8) mit dem Steuergerät (2),
- wobei in dem Inbetriebnahmemodus unabhängig von dem Typ des mit dem Steuergerät (2) gekoppelten Hardware-Moduls (3a, 3b, 3c) die Parameter aller typspezifischen Parametersätze (4a, 4b, 4c) sichtbar und einstellbar sind, und
- wobei in dem Diagnosemodus nur die Parameter des Parametersatzes (4a, 4b, 4c) sichtbar und einstellbar sind, der dem Typ des mit dem Steuergerät (2) gekoppelten Hardware-Moduls (3a, 3b, 3c) entspricht.

8. Steuergerätesystem (1), wobei das Steuergerätesystem (1) aufweist:
- mindestens ein elektrisches Steuergerät (2), und
- eine Mehrzahl von mit dem Steuergerät (2) mittels Einstecken in einen dafür vorgesehenen Steckplatz des Steuergeräts (2) koppelbaren Hardware-Modulen (3a, 3b, 3c) unterschiedlichen Typs, wobei jedem Typ von Hardware-Modul (3a, 3b, 3c) ein typspezifischer Parametersatz (4a, 4b, 4c) und ein typspezifisches Steuerprogramm (5a, 5b, 5c) zugeordnet sind, wobei ein jeweiliger Parametersatz (4a, 4b, 4c) eine Menge von Parametern mit einstellbaren Parameterwerten aufweist und das typspezifische Steuerprogramm (5a, 5b, 5c) eine Treibersoftware ist, die zu dem Typ des gekoppelten Hardware-Moduls (3a, 3b, 3c) passend ist,
- wobei das Steuergerät (2) zur Durchführung eines Verfahrens nach einem der vorhergehenden Ansprüche ausgebildet ist.

9. Steuergerätesystems (1) nach Anspruch 8, **dadurch gekennzeichnet, dass**
- das Steuergerätesystem (1) ein Bediengerät (8) aufweist, das zum Einstellen der Parameterwerte ausgebildet ist.

## Claims

1. Method for starting up a controller system (1), the controller system (1) comprising:
- at least one electrical controller device (2), and
- a plurality of hardware modules (3a, 3b, 3c) of different types which are couplable to the controller device (2), wherein a type-specific parameter set (4a, 4b, 4c) and a type-specific control program (5a, 5b, 5c) are assigned to each type of hardware module (3a, 3b, 3c), wherein a respective parameter set (4a, 4b, 4c) has a number of parameters having adjustable parameter values and the type-specific control program (5a, 5b, 5c) is driver software matched to the type of hardware module (3a, 3b, 3c) coupled,
wherein the method comprises the steps of:
- coupling a hardware module (3a, 3b, 3c) to the controller device (2) in that the hardware module (3a, 3b, 3c) is plugged into a plug-in position of the controller device (2) provided for that purpose,
- using the controller device (2) to determine the type of coupled hardware module (3a, 3b, 3c) in that the controller device (2) reads a type identification of the hardware module (3a, 3b, 3c) from a register of the hardware module (3a, 3b, 3c) provided for that purpose,
- using the controller device (2) to select the type-specific control program (5a, 5b, 5c), and
- using the controller device (2) to select the type-specific parameter set (4a, 4b, 4c) as the adjustable parameter set.

2. Method according to claim 1, **characterized in that**
- the hardware modules (3a, 3b, 3c) are field bus modules for field buses of different types, and/or the hardware modules (3a, 3b, 3c) are transducer modules for transducers of different types, and/or the hardware modules (3a, 3b, 3c) are safety modules of different types.

3. Method according to claim 1 or 2, **characterized in that**
- the control program (5a, 5b, 5c) is selected from a memory (6) inside the controller.

4. Method according to any of the preceding claims, **characterized in that**
- all type-specific parameter sets (4a, 4b, 4c) are loaded from a memory (7) outside the controller into a parameter set memory (10) inside the controller, and the type-specific parameter set is selected from the parameter set memory (10) inside the controller.

5. Method according to any of the preceding claims, **characterized by** the steps of:
- adjusting values of parameters in the loaded parameter set (4a, 4b, 4c) and storing the adjusted values.

6. Method according to any of the preceding claims, **characterized in that**
- the controller device (2) is a frequency converter, a servo converter or a motion controller.

7. Method according to any of the preceding claims, **characterized in that**
- the controller system comprises an operating device (8) which is operable in a start-up mode and in a diagnostic mode, wherein the method comprises the further steps of:
- coupling the operating device (8) to the controller device (2),
- wherein the parameters in all type-specific parameter sets (4a, 4b, 4c) are visible and adjustable in the start-up mode irrespective of the type of hardware module (3a, 3b, 3c) coupled to the controller device (2), and
- wherein only the parameters in the parameter set (4a, 4b, 4c) corresponding to the type of hardware module (3a, 3b, 3c) coupled to the controller device (2) are visible and adjustable in the diagnostic mode.

8. Controller system (1), the controller system (1) comprising:
- at least one electrical controller device (2), and
- a plurality of hardware modules (3a, 3b, 3c) of different types which are couplable to the controller device (2) by plugging into a plug-in position of the controller device (2) provided for that purpose, wherein a type-specific parameter set (4a, 4b, 4c) and a type-specific control program (5a, 5b, 5c) are assigned to each type of hardware module (3a, 3b, 3c), wherein a respective parameter set (4a, 4b, 4c) has a number of parameters having adjustable parameter values and the type-specific control program (5a, 5b, 5c) is driver software matched to the type of hardware module (3a, 3b, 3c) coupled,
- wherein the controller device (2) is configured for carrying out a method according to any of the preceding claims.

9. Controller system (1) according to claim 8, **characterized in that**
- the controller system (1) comprises an operating device (8) which is configured to adjust the parameter values.

## Revendications

1. Procédé de mise en service d'un système d'unités de commande (1), le système d'unités de commande (1) comportant :
- au moins une unité de commande électrique (2), et
- une pluralité de modules matériels (3a, 3b, 3c) de différents types qui peuvent être accouplés à l'unité de commande (2), chaque type de module matériel (3a, 3b, 3c) étant associé à un ensemble de paramètres (4a, 4b, 4c) spécifique au type et à un programme de commande (5a, 5b, 5c) spécifique au type, un ensemble de paramètres respectif (4a, 4b, 4c) comportant un nombre de paramètres ayant des valeurs de paramètre réglables et le programme de commande (5a, 5b, 5c) spécifique au type étant un logiciel pilote qui est adapté au type du module matériel (3a, 3b, 3c) qui est accouplé,
le procédé comprenant les étapes suivantes :
- accoupler un module matériel (3a, 3b, 3c) à l'unité de commande (2) par insertion du module matériel (3a, 3b, 3c) dans un emplacement prévu à cet effet de l'unité de commande (2),
- au moyen de l'unité de commande (2), déterminer le type du module matériel accouplé (3a, 3b, 3c) en ce que l'unité de commande (2) lit un identifiant de type du module matériel (3a, 3b, 3c) dans un registre prévu à cet effet du module matériel (3a, 3b, 3c),
- au moyen de l'unité de commande (2), sélectionner le programme de commande (5a, 5b, 5c) spécifique au type, et
- à l'aide de l'unité de commande (2), sélectionner l'ensemble de paramètres (4a, 4b, 4c) spécifique au type comme ensemble de paramètres réglable.

2. Procédé selon la revendication 1, **caractérisé en ce que**
- les modules matériels (3a, 3b, 3c) sont des modules de bus de terrain destinés à des bus de terrain de différents types, et/ou les modules matériels (3a, 3b, 3c) sont des modules codeurs destinés à des codeurs de différents types et/ou les modules matériels (3a, 3b , 3c) sont des modules de sécurité de différents types.

3. Procédé selon la revendication 1 ou 2, **caractérisé en ce que**
- le programme de commande (5a, 5b, 5c) est sélectionné dans une mémoire (6) interne à l'unité de commande.

4. Procédé selon l'une des revendications précédentes, **caractérisé en ce que** tous les ensembles de paramètres (4a, 4b, 4c) spécifiques au type sont chargés depuis une mémoire (7) externe à l'unité de commande jusque dans une mémoire d'ensemble de paramètres (10) interne à l'unité de commande et l'ensemble de paramètres spécifique au type est sélectionné dans la mémoire d'ensemble de paramètres interne à l'unité de commande (10).

5. Procédé selon l'une des revendications précédentes, **caractérisé par** les étapes suivantes :
- régler des valeurs de paramètres de l'ensemble de paramètres (4a, 4b, 4c) qui a été chargé et mémoriser les valeurs de réglage.

6. Procédé selon l'une des revendications précédentes, **caractérisé en ce que**
- l'unité de commande (2) est un convertisseur de fréquence, un servo-convertisseur ou un contrôleur de mouvement.

7. Procédé selon l'une des revendications précédentes, **caractérisé en ce que**
- le système d'unités de commande comporte une unité de service (8) qui peut être utilisée dans un mode de mise en service et dans un mode de diagnostic, le procédé comportant les étapes supplémentaires suivantes :
- accoupler l'unité de service (8) à l'unité de commande (2),
- dans le mode de mise en service, quel que soit le type de module matériel (3a, 3b, 3c) accouplé à l'unité de commande (2), les paramètres de tous les ensembles de paramètres (4a, 4b, 4c) spécifiques au type étant visibles et réglables, et
- dans le mode de diagnostic, les seuls paramètres qui sont visibles et réglables étant ceux de l'ensemble de paramètres (4a, 4b, 4c) qui correspond au type du module matériel (3a, 3b, 3c) qui est accouplé à l'unité de commande (2).

8. Système d'unités de commande (1), le système d'unités de commande (1) comportant :
- au moins une unité de commande électrique (2), et
- une pluralité de modules matériels (3a, 3b, 3c) de différents types qui peuvent être accouplés par enfichage dans un emplacement prévu à cet effet de l'unité de commande (2), chaque type de module matériel (3a, 3b, 3c) étant associé à un ensemble de paramètres (4a, 4b, 4c) spécifiques au type et à un programme de commande (5a, 5b, 5c) spécifique au type, un ensemble de paramètres respectif (4a, 4b, 4c) comportant un nombre de paramètres ayant des valeurs de paramètre réglables et le programme de commande (5a, 5b, 5c) spécifique au type étant un logiciel pilote qui est adapté au type du module matériel (3a, 3b, 3c) qui est accouplé,
- l'unité de commande (2) étant conçue pour mettre en œuvre un procédé selon l'une des revendications précédentes.

9. Système de commande (1) selon la revendication 8, **caractérisé en ce que**
- le système d'unités de commande (1) comporte une unité de service (8) qui est conçue pour régler les valeurs de paramètre.
